# EUROPEAN PATENT APPLICATION

(11) **EP 0 911 131 A1**
(43) Date of publication of application: **28.04.1999**
(21) Application number: 98118329.6
(22) Date of filing: 28.09.1998
(51) Int. Cl.: B29B 17/00, B29C 47/10, B29B 13/10, B29C 47/50, B29B 7/88, B29B 7/42

(54) **Unit for feeding a screw extruder with shredded plastic material**

(30) Priority: 17.10.1997 IT BO970624
(71) Applicant: GAMMA MECCANICA S.R.L., I-42021 Bibbiano (Reggio Emilia) (IT)
(72) Inventor: Calza, Giuliano, 45036 Ficarolo (Rovigo) (IT)
(74) Representative: Modiano, Guido, Dr.-Ing.

(57) **Abstract**

A unit for feeding a screw extruder (48) with plastic material comminuted in a comminutor (2), comprising at least one conveyance device (47) interposed between the comminutor (2) and the extruder (48) and adapted to receive the material comminuted by the comminutor (2) and to convey it into the extruder (48).

## Description

The present invention relates to a unit for feeding a screw extruder with shredded plastic material.

For example prior art documents EP 0 329 662 B1 and PCT/AT93/00051 disclose the above-described type of units. The first patent relates to a unit which comprises a comminutor composed of a container inside which rotating cutters are arranged which comminute the plastic material and push it directly into a screw extruder. The second patent discloses a unit comprising two comminutors arranged in series to an extruder.

These units are not entirely satisfactory because they do not allow constant feeding of the extruder; accordingly, the pressure in the extruder is subject to variations which entail differences in the density of the extruded product.

The aim of the present invention is to obviate the above-described drawbacks of conventional units, i.e., to provide a unit which allows to feed the extruder so that the plastic material has a constant pressure.

Within the scope of this aim, an object of the present invention is to provide a unit which is simple, relatively easy to provide in practice, safe in use, effective in operation and has a relatively low cost.

Another object is to provide a unit which allows to install means for feeding additives to be added to the comminuted plastics.

This aim, these objects and others which will become apparent hereinafter, are all achieved with a unit for feeding a screw extruder with plastic material comminuted in a comminutor, characterized in that it comprises at least one conveyor device interposed between said comminutor and said extruder and adapted to receive the material comminuted by said comminutor and convey it into said extruder.

Further characteristics and advantages of the present invention will become apparent from the following detailed description of a preferred but not exclusive embodiment of a unit for feeding presses with comminuted plastic according to the invention, illustrated only by way of non-limitative example in the accompanying drawings, wherein:

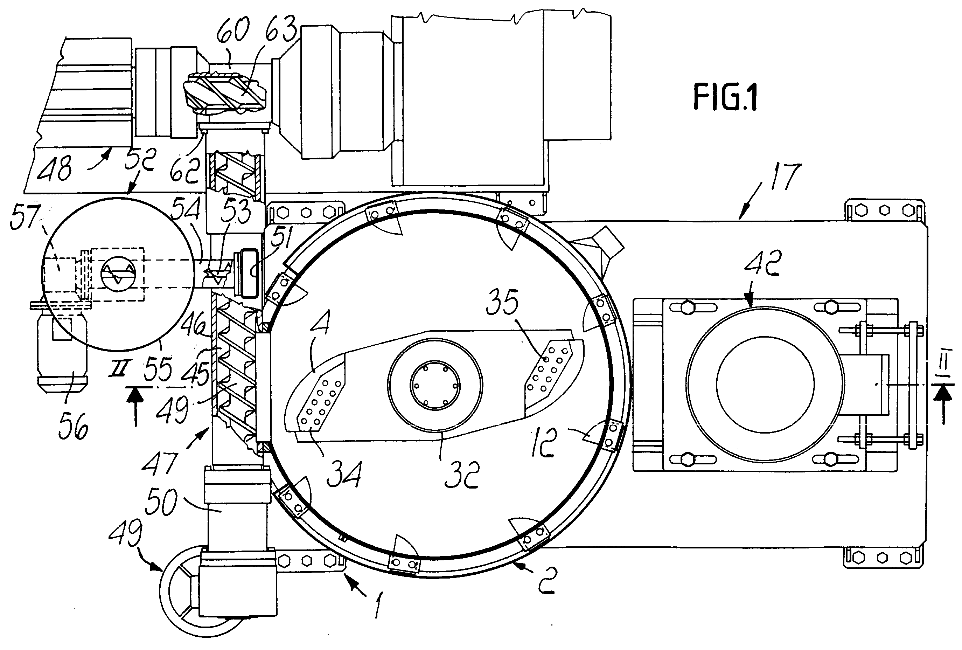

Figure 1 is a sectional plan view of the unit;

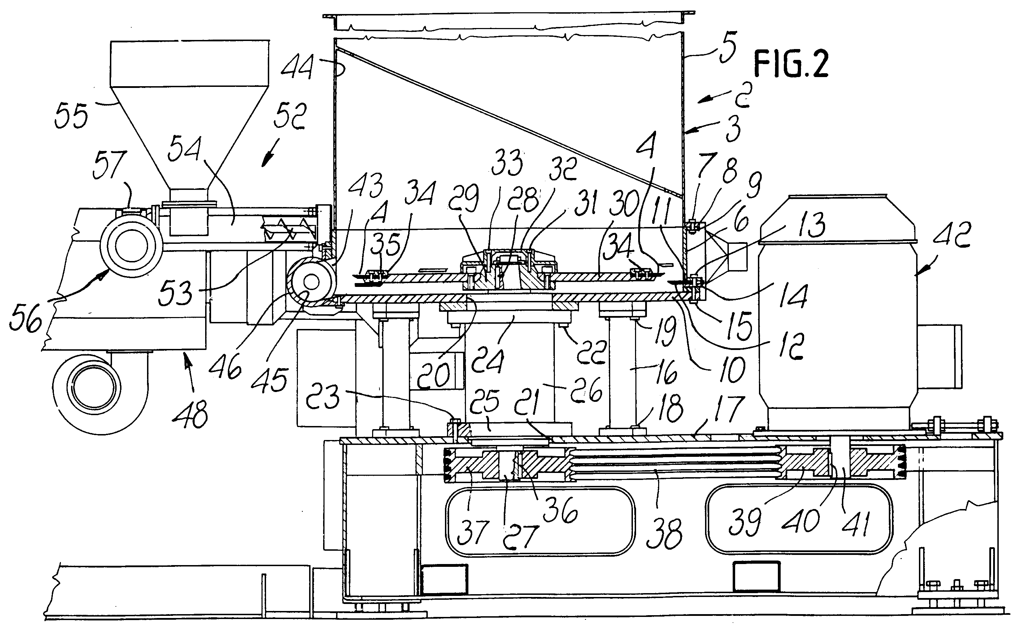

Figure 2 is a sectional lateral elevation view of the unit, taken along the plane II-II of Figure 1.

With particular reference to the above figures, the feeder unit is generally designated by the reference numeral 1 and comprises a comminutor 2 which is constituted by a cylindrical container 3 and by rotating cutters 4. The container 3 is composed of two cylindrical rings 5 and 6 which are axially coupled to each other by means of bolts 7 which pass through two flanges 8 and 9 welded to the lower and upper edges, respectively, of the cylindrical rings 5 and 6. The cylindrical ring 6 is closed, in a downward region, by a base 10, and the upper ring 5 forms, at the top, the inlet for the plastic material to be comminuted. Proximate to the lower edge of the cylindrical ring 6 through slots 11 are provided, through which blades 12 are guided. The blades 12 are fixed, by means of bolts 13, to a flange 14 which is welded externally to the cylindrical ring 6. Screws 15 are further screwed into the flange 14 and rigidly couple the cylindrical ring 6 to the base 10.

The container 2 rests, by means of flanged posts 16, on a box-like footing 17 which is rigidly coupled to the posts by screws 18, while screws 19 rigidly couple the posts 16 to the base 10. A hole 20 is formed centrally in the base 10 and is vertically aligned with an additional hole 21 of the upper surface of the footing 17. The opposite ends of a sleeve 26 are centered and fixed, by means of screws 22 and 23, in the holes 20 and 21 and have flanges 24 and 25. A shaft 27 is supported in said sleeve so that it can rotate about a vertical axis. The upper end of the shaft 27 protrudes into the container 2, and a flanged sleeve 29 is keyed thereon by means of a key 28. Two diametrically opposite arms 30 are fixed thereon by means of bolts 31. A cap 32, fixed by means of screws 33 which engage the flanged sleeve 29, covers the top of the shaft 28 and the heads of the bolts 31.

Two respective rotating cutters 4 are rigidly applied to the free end of the arms 30 by means of fixing plates 34 and screws 35; their cutting edges lie along a convex curve which is orientated in the direction of rotation. A pulley 37 is rotationally rigidly coupled, by means of a key 36, on the other end of the shaft 27, which lies inside the footing 17. A plurality of V-belts 38 is wound around said pulley. The belts are closed in a loop around another pulley 39 which is keyed, by means of a tab 40, to the shaft 41 of an electric motor drive 42 mounted on the footing 17 to the side of the container 3.

An opening 43 is formed in the ring 6 and connects the chamber 44 of the comminutor to a chamber 45 which is enclosed by a cylindrical casing 46 which is tangent to the container 3 and is part of a device, generally designated by the reference numeral 47, for feeding a conventional screw extruder 48. Said device is composed of a screw auger 49 which can rotate within the chamber 45 and is actuated by a motor 49 by means of a gearing-down transmission 50. At least one device 47 is provided. On the opposite side with respect to the motor 49, in the casing 46 there is provided, in an upward region, an opening 51 which is connected to the outlet of an auxiliary unit, generally designated by the reference numeral 52, for feeding additives, for example dyes or granulated plastic. Said unit 52 is constituted, for example, by a screw auger 53, which is perpendicular to the screw auger 49 and can rotate in a cylindrical casing 54, and by a hopper 55 for containing the additives.

The screw auger 53 is driven by a motor 56 which is coupled to a gearing-down unit 57, so that the additive material that descends from the hopper 55 into the casing 54 can pour into the chamber 45 of the casing 46 through the opening 51.

The connection of the cylindrical casing 46 to the casing 60 of the extruder 48 is provided by means of a flange 61 and bolts 62, so that the inflow of the material conveyed by the screw auger 49 into the casing 60 occurs proximate to the upstream end of the screw feeder 63 of the extruder lying furthest from the extruded product outlet nozzle.

The operation of the unit can be easily deduced from the description given. In particular, the plastic material to be processed is introduced in the container 2 and is comminuted therein by the combined action of the rotating cutters 4 and of the blades 12 to dimensions which allow the material to substantially flow. In such conditions, the comminuted material can be conveyed through the opening 43 and can pass into the chamber 45 of the casing 4 of the feeder device 47. The screw auger 49 produces a constant thrust on the comminuted material, which is sent to the screw extruder 48, while the device 52 optionally provides additives. In this manner, the constant thrust applied by the device 47 ensures the complete filling of the chamber of the extruder 48 and a constant quality of the extruded product.

In its practical embodiment, the invention is susceptible of numerous modifications and variations. For example, the screw feeder 49, instead of having a constant pitch, can have a variable pitch which decreases toward the inlet of the extruder, or can be of the double-threaded type.

Advantageously, the materials employed, as well as the shapes and the dimensions, may be any according to requirements without thereby abandoning the scope of the protection of the appended claims.

The disclosures in Italian Patent Application No. BO97A000624 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A unit for feeding a screw extruder (48) with plastic material comminuted in a comminutor (2), characterized in that it comprises at least one conveyance device (47) interposed between said comminutor (2) and said extruder (48) and adapted to receive the material comminuted by said comminutor (2) and to convey it into said extruder (48).

2. The unit according to claim 1, characterized in that a unit (52) for feeding additives is associated with said at least one conveyance device (47).

3. The unit according to claim 1, characterized in that said conveyance device (47) is constituted by a cylindrical casing (46) provided with an inlet which is connected to said comminutor (2) and an outlet which is connected to said extruder (48), a screw auger (49) being able to rotate in said casing (46) to convey said plastic material toward said extruder (48).

4. The unit according to claim 3, characterized in that the screw auger (49) of the conveyance device has a variable pitch.

5. The unit according to claim 3, characterized in that the screw auger (49) of the conveyance device is of the double-threaded type.

6. The unit according to claim 2, characterized in that the additive feeder unit (52) is of the screw type.
